(19) **Europäisches Patentamt**
**European Patent Office**
**Office européen des brevets**

(11) **EP 2 607 414 B1**

(12) **EUROPEAN PATENT SPECIFICATION**

(45) Date of publication and mention
of the grant of the patent:
**01.03.2017 Bulletin 2017/09**

(51) Int Cl.:
*C08J 9/00* *(2006.01)*   *B29C 55/04* *(2006.01)*
*H01M 2/16* *(2006.01)*   *B29K 23/00* *(2006.01)*
*B29C 55/00* *(2006.01)*   *B29C 47/00* *(2006.01)*
*B29C 55/06* *(2006.01)*   *C08J 5/18* *(2006.01)*
*H01M 2/14* *(2006.01)*   *H01M 2/18* *(2006.01)*
*H01M 10/0525* *(2010.01)*   *B29K 105/04* *(2006.01)*

(21) Application number: **11817995.1**

(22) Date of filing: **29.06.2011**

(86) International application number:
**PCT/JP2011/064974**

(87) International publication number:
**WO 2012/023348 (23.02.2012 Gazette 2012/08)**

(54) **PROPYLENE RESIN MICROPOROUS FILM, BATTERY SEPARATOR, BATTERY, AND METHOD FOR PRODUCING PROPYLENE RESIN MICROPOROUS FILM**

MIKROPORIGER PROPYLENHARZFILM, BATTERIESEPARATOR, BATTERIE UND VERFAHREN ZUR HERSTELLUNG DES MIKROPORIGEN PROPYLENHARZFILMS

FILM MICROPOREUX DE RÉSINE DE PROPYLÈNE, SÉPARATEUR DE BATTERIE, BATTERIE ET PROCÉDÉ DE FABRICATION DU FILM MICROPOREUX DE RÉSINE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.11.2010 JP 2010245103**
**18.08.2010 JP 2010183414**

(43) Date of publication of application:
**26.06.2013 Bulletin 2013/26**

(73) Proprietor: **Sekisui Chemical Co., Ltd.**
**Osaka-shi, Osaka 530-8565 (JP)**

(72) Inventors:
• **OGAWA, Akihiro**
**Mishima-gun**
**Osaka 618-0021 (JP)**
• **SAWADA, Takahiko**
**Mishima-gun**
**Osaka 618-0021 (JP)**
• **TADA, Hiroshi**
**Mishima-gun**
**Osaka 618-0021 (JP)**
• **KOBARU, Shotaro**
**Mishima-gun**
**Osaka 618-0021 (JP)**

• **MINAMI, Masatoshi**
**Mishima-gun**
**Osaka 618-0021 (JP)**
• **SASAKURA, Mitsuo**
**Mishima-gun**
**Osaka 618-0021 (JP)**
• **YAMAGATA, Kazuo**
**Koka-shi**
**Shiga 528-8585 (JP)**

(74) Representative: **Ter Meer Steinmeister & Partner**
**Patentanwälte mbB**
**Nymphenburger Straße 4**
**80335 München (DE)**

(56) References cited:
**WO-A1-2008/035674     WO-A1-2008/059806**
**WO-A1-2009/145165     WO-A1-2010/074151**
**JP-A- 2 047 031         JP-A- 11 140 209**
**JP-A- 2009 211 947     US-A- 5 922 492**
**US-A1- 2006 103 055**

• **DATABASE WPI Week 200968 Thomson Scientific, London, GB; AN 2009-P40945 XP002732962, & JP 2009 226746 A (TORAY IND INC) 8 October 2009 (2009-10-08)**

**Description**

Technical Field

The present invention relates to a propylene resin microporous film and a method for producing the samewhich is suitably used for a separator of a lithium ion battery, and a battery separator formed of the propylene resin microporous film and a battery including the same.

Background Art

A lithium ion battery has been conventionally used as a power supply of a portable electronic apparatus. The lithium ion battery is generally formed by disposing, in an electrolytic solution, a positive electrode, a negative electrode, and a separator. The positive electrode is formed by applying lithium cobaltate or lithium manganate to a surface of an aluminum foil. The negative electrode is formed by applying carbon to a surface of a copper foil. The separator separates the positive and negative electrodes to prevent a short circuit of the electrodes.

When the lithium ion battery is charged, lithium ions migrate from the positive electrode to the negative electrode. In contrast, when the lithium ion battery is discharged, lithium ions migrate from the negative electrode to the positive electrode. In this manner, the lithium ion battery is charged and discharged. Therefore, it is necessary that lithium ions can easily pass through the separator used in the lithium ion battery.

When the lithium ion battery is repeatedly charged and discharged, dendrites (dendrite crystals) of lithium are generated on the end surface of the negative electrode. The dendrites break through the separator to cause a very small internal short circuit (being a dendrite short circuit) between the positive and negative electrodes, resulting in a problem of remarkable deterioration of battery capacity.

To improve the safety of the lithium ion battery, an olefin resin porous film mainly formed of polyethylene is used for the separator. When the lithium ion battery generates abnormal heat due to a short circuit or the like, polyethylene forming the porous film melts at a temperature region of about 130°C and a porous structure thereof is blocked (shut down), thereby stopping the abnormal heat generation. Thus, the safety of such a lithium ion battery can be ensured.

In recent years, a large-type battery such as a lithium ion battery for automobiles has a higher output power. Since a temperature of the large-type battery may rapidly increase to higher than 130°C, a shutdown function is not necessarily required for the battery, but heat resistance is considered as an important factor for the lithium ion battery. To achieve a higher output power of the lithium ion battery, a separator used for the lithium ion battery needs to have a lower resistance to the passage of lithium ions. Therefore, high air permeability is required for the separator. Furthermore, in the large-type lithium ion battery, it is important to ensure a long lifetime and long-term safety.

Various separators using a porous film formed of polypropylene having a high heat resistance have been proposed. Patent Literature 1 has proposed a method for producing a polypropylene microporous film, for example. The method includes melt-extruding a composition including polypropylene, a polymer having a melt crystallization temperature higher than that of polypropylene, and a β-crystal nucleating agent to mold the extruded composition into a sheet at high temperatures, and stretching the sheet at least in one direction.

However, a polypropylene microporous film obtained by the above-described method for producing a polypropylene microporous film has a low degree of air permeability and insufficient lithium ion permeability. Therefore, it is difficult to adopt the polypropylene microporous film in a lithium ion battery that requires to have a higher output power.

Patent Literature 2 has proposed a multilayered porous membrane. The multilayered porous membrane has a polyolefin resin porous membrane and a porous layer which is formed on at least one side of the polyolefin resin porous membrane, contains an inorganic filler or a resin having a melting point and/or a glass transition temperature of 180°C or higher, and has a thickness of 0.2 to 100 μm. Furthermore, the multilayered porous membrane has a degree of air permeability of 1 to 650 sec/100 cc. However, the multilayered porous membrane has insufficient lithium ion permeability, and therefore it is difficult to adopt the multilayered porous membrane in a lithium ion battery that requires to have a higher output power.

Patent Literature 3 has proposed a non-aqueous electrolytic solution battery having a negative electrode formed of light metal, a separator impregnated with a non-aqueous electrolytic solution, and a positive electrode, wherein a polyethylene fine powder is previously adhered onto the separator. Furthermore, a non-woven polypropylene cloth suitable for application of high output power battery and having a high heat resistance is used for the separator.

However, the separator has a pore size as large as about several micrometers, and therefore occurrence of a small short circuit may be expected. In addition to problems of insufficient lifetime and long-term safety, the separator has a problem of difficulty in formation of thinner film.

Patent Literature 4 is directed to a polyolefin microporous membrane having a surface structure comprising fine spaces formed by partitioning micro-fibrils and a network formed by uniform dispersion of said micro-fibrils.

Citation List

Patent Literature

   Patent Literature 1: Japanese Patent Application Laid-Open No. Sho. 63-199742
   Patent Literature 2: Japanese Patent Application Laid-Open No. 2007-273443
   Patent Literature 3: Japanese Patent Application Laid-Open No. Sho. 60-52
   Patent Literature 4: US 2006/0103055 A1

Summary of Invention

Technical Problem

The present invention provides a propylene resin microporous film and a method for producing the same which has excellent lithium ion permeability, can be used to fabricate high-performance lithium ion batteries, and can prevent short circuits between positive and negative electrodes by dendrites and a rapid decrease in discharge capacity even when the microporous film is utilized for the application of high output power battery, and a battery separator formed of the propylene resin microporous film and a battery using the same. Solution to Problem

The propylene resin microporous film of the present invention is a propylene resin microporous film having micropores formed by uniaxially stretching a propylene resin film, and characterized by having an air permeability of 100 to 400 s/100 mL, and a rate of surface aperture of 30 to 55%, wherein the propylene resin has a molecular weight distribution (weight average molecular weight / number average molecular weight) of 7.5 to 12.0, wherein the propylene resin has a weight average molecular weight of 250,000 to 500,000 and a melting point of 160 to 170°C,
wherein the longest diameter of aperture edges of the micropores is 1 $\mu$m or less, and the average longer diameter of the aperture edges is 500 nm or less,
wherein a pore density is 15 pores/$\mu$m$^2$ or more.

The method for producing a propylene resin microporous film is a method comprising: an extrusion step of supplying a propylene resin to an extruder and melting and kneading the propylene resin, and extruding the propylene film resin through a T-die attached to a tip of the extruder with a draw ratio of 50 or more to obtain a propylene resin film, the propylene resin having a weight average molecular weight of 250,000 to 500,000, a molecular weight distribution (weight average molecular weight / number average molecular weight) of 7.5 to 12.0, and a melting point of 160 to 170°C; an aging step of aging the propylene resin film for one minute or more at a temperature ranging from a temperature lower by 30°C than the melting point of the propylene resin to a temperature lower by 1°C than the melting point of the propylene resin; a stretching step of uniaxially stretching the aged propylene resin film; and an annealing step of annealing the stretched propylene resin film.

Examples of the propylene resin used for the propylene resin microporous film include a propylene homopolymer and a copolymer of propylene and another olefin. The propylene resin may be used alone or in combination of two or more kinds thereof. The copolymer of propylene and another olefin may be any of a block copolymer and a random copolymer.

Examples of olefin copolymerizable with propylene include $\alpha$-olefins such as ethylene, 1-butene, 1-pentene, 4-methyl-1-pentene, 1-hexene, 1-octene, 1-nonene, and 1-decene.

When the weight average molecular weight of the propylene resin is small, micropores of the propylene resin microporous film may be ununiformly formed. When the weight average molecular weight is large, the formation of a film may be unstable, and micropores may not be easily formed. Therefore, the weight average molecular weight is 250,000 to 500,000, and preferably 280,000 to 480,000.

When the molecular weight distribution (weight average molecular weight Mw/ number average molecular weight Mn) of the propylene resin is small, the rate of surface aperture of the propylene resin microporous film may be small. When the molecular weight distribution is large, the mechanical strength of the propylene resin microporous film may be lowered. Therefore, the molecular weight distribution is 7.5 to 12.0, preferably 8.0 to 11.5, and more preferably 8.0 to 11.0.

The weight average molecular weight and number average molecular weight of the propylene resin are values determined with respect to polystyrene and measured by gel permeation chromatography (GPC). Specifically, 6 to 7 mg of propylene resin is weighed, put in a test tube, and diluted with a solution of 0.05% by weight of dibutyl hydroxy toluene (BHT) in o-dichlorobenzene (o-DCB) so that the concentration of the propylene resin is 1 mg/mL, to prepare a diluted solution.

The diluted solution is shaken with a device for dissolution and filtration at 145°C and a revolution speed of 25 rpm over 1 hour to dissolve the propylene resin in the solution of BHT in o-DCB. The solution serves as a sample. The sample can be used to determine the weight average molecular weight and number average molecular weight of the propylene resin by GPC.

The weight average molecular weight and number average molecular weight of the propylene resin can be determined, for example, with the following measurement device under the following measurement conditions.

Measurement device: "HLC-8121GPC/HT" (manufactured by TOSOH Corporation)
Measurement conditions: column: TSKgelGMHHR-H (20) HT × 3
TSKguardcolumn-HHR(30)HT × 1
Mobile phase: o-DCB 1.0 mL/min
Sample concentration: 1 mg/mL
Detector: Blythe type refractometer
Standard substance: polystyrene (available from TOSOH Corporation, molecular weight: 500 to 8,420,000)
Elution condition: 145°C
SEC temperature: 145°C

When the melting point of the propylene resin is low, the mechanical strength of the propylene resin microporous film at high temperatures may be lowered. When the melting point is high, the formation of a film may be unstable. Therefore, the melting point is 160 to 170°C, and preferably 160 to 165°C.

When the amount of heat of fusion of the propylene resin determined by differential scanning calorimetry (DSC) is small, the orientation of the propylene resin is low. Thus, micropores cannot be uniformly formed in the propylene resin film during the stretching process of the propylene resin film. Accordingly, the amount of heat of fusion is preferably 85 mJ/mg or more, and more preferably 90 mJ/mg or more.

The melting point and the amount of heat of fusion of the propylene resin determined by DSC are values measured as described below. First, 10 mg of propylene resin is weighed. The propylene resin is heated from 0°C to 250°C at a temperature increasing rate of 10°C/min, and kept at 250°C over 3 minutes. The propylene resin is then cooled from 250°C to 0°C at a temperature decreasing rate of 10°C/min, and kept at 0°C over 3 minutes. Subsequently, the propylene resin is reheated from 0°C to 250°C at a temperature increasing rate of 10°C/min. The temperature at the top of melting peak in the reheating process is determined as the melting point. As the amount of heat of fusion, the total area of the melting peak is calculated. For example, DSC220C manufactured by Seiko Instruments Inc. can be used in DSC of the propylene resin.

The propylene resin microporous film of the present invention is obtained by uniaxially stretching a propylene resin film formed of the propylene resin. Before uniaxial stretching, the amount of heat of fusion of the propylene resin film determined by differential scanning calorimetry (DSC) is preferably 110 mJ/mg or more, and more preferably 112 mJ/mg or more. Lamellae are not sufficiently formed in the propylene resin film having a small amount of heat of fusion determined by DSC. Even when such a propylene resin film is uniaxially stretched, micropores may not be formed in the propylene resin film.

The amount of heat of fusion of the propylene resin film determined by DSC is a value measured as described below. A propylene resin film is first cut into a certain size to form a specimen of 10 mg. The specimen is then heated from 0°C to 250°C at a temperature increasing rate of 10°C/min, and the total area of fusion peak is calculated as the amount of heat of fusion of the propylene resin film. For example, DSC220C manufactured by Seiko Instruments Inc. can be used in DSC of the propylene resin film.

The birefringence of the propylene resin film is preferably $1.4 \times 10^{-2}$ or more, and more preferably $1.5 \times 10^{-2}$ or more. When the birefringence of the propylene resin film is small, the propylene resin is not sufficiently oriented, and a lamellar structure is not sufficiently formed. Thus, the air permeability of a propylene resin microporous film is difficult to be enhanced.

The birefringence of the propylene resin film is measured as follows. The thickness D of the propylene resin film is first measured using a micro-gauge. Subsequently, a paraffin wax is entirely applied to both faces of the propylene resin film to eliminate variations of light transmission amount due to diffuse reflection of light. Two glass plates with a thickness of 1 mm are overlapped in the thickness direction thereof, and the propylene resin film is put on the glass plates. The light transmittance T(%) of the propylene resin film is measured with a birefringence measuring device under conditions of an analyzer of 135° and a polarizer of 45°. The phase difference Re at a wavelength $\lambda$ of 550 nm is calculated on the basis of the following formula, and the birefringence $\Delta n$ is calculated from the resulting phase difference Re.

$$\text{Phase difference Re} = 550 \times \arcsin (T^{1/2})/\pi$$

$$\text{Birefringence } \Delta n = Re/D$$

The elastic recovery rate of the propylene resin film at 100% elongation is preferably 95% or more, and more preferably 96% or more. Even when a propylene resin film having an elastic recovery rate at 100% elongation of less than 95% is uniaxially stretched, micro through pores (micropores) cannot be uniformly formed. For this reason, a propylene resin microporous film through which lithium ions can pass smoothly and uniformly may not be obtained.

The elastic recovery rate at 100% elongation of the propylene resin film is a value measured under atmospheres of a temperature of 25°C and a relative humidity of 65% as described below. A propylene resin film is first cut into a strip-shaped specimen with a width of 10 mm and a length of 100 mm so that the extrusion direction of the propylene resin film is aligned with the longitudinal direction of the specimen. A marked line is drawn on the specimen so as to be parallel to the longitudinal direction and have a length of 50 mm. Both ends of the specimen in the longitudinal direction are held by grippers and fixed in a tension tester. At this time, a distance between the grippers is set to 50 mm, and the marked line of the specimen is disposed between the grippers. The specimen is stretched in the longitudinal direction at a stretching rate of 50 mm/min until the distance between the grippers is 100 mm (elongation rate: 100%). Immediately after that, the specimen is relaxed at the same rate (50 mm/min) until the distance between the grippers is 50 mm. Lengths of marked lines of specimens before elongation, when stretched at 100% elongation, and relaxed at a tensile load of zero are measured to be 50 (mm), 100 (mm), and L (mm), respectively. The elastic recovery rate (%) is calculated by the following formula (1). As in the same manner described above, three or more specimens are prepared. The elastic recovery rate of each specimen is calculated, and the arithmetic average thereof is an elastic recovery rate at 100% elongation of the propylene resin film.

$$\text{Elastic recovery rate (\%)} = 100 \times (100 - L)/50 \quad (1)$$

When the degree of air permeability of the propylene resin microporous film is large, the lithium ion permeability of the propylene resin microporous film is lowered. Therefore, the performance of a lithium ion battery using the propylene resin microporous film may be lowered. The propylene resin microporous film having the small degree of air permeability may have the low film strength. Thus, the degree of air permeability is limited to 100 to 400 s/100 mL, and preferably 100 to 320 s/100 mL.

The degree of air permeability of the propylene resin microporous film is a value measured at a temperature of 23°C and a relative humidity of 65% in accordance with JIS P8117.

The rate of surface aperture of the propylene resin microporous film is a main factor of controlling a degree of air permeability, and depends on the size of micropores and the number of micropores per unit area. To increase the degree of air permeability of the propylene resin microporous film, the size or number of micropores need to be increased. It is harder to control the number of micropores than to control the size thereof. In conventional microporous films, a film having a higher degree of air permeability tends to have a larger micropore. Therefore, the conventional microporous film has problems such as an increase in resistance value due to local migration of lithium ions, occurrence of dendrites, and a decrease in film strength. According to the propylene resin microporous film of the present invention, a low resistance for lithium ion migration can be ensured. In addition, the number of micropores per unit area of the propylene resin microporous film is increased while the size of the micropore is kept to a level which is difficult to generate dendrites. Thus, a propylene resin microporous film having a certain degree of air permeability as described above can be obtained. The rate of surface aperture of such a propylene resin microporous film of the present invention is 30 to 55%, and more preferably 30 to 50%.

The rate of surface aperture of a propylene resin microporous film can be measured as follows. A measurement part of plane rectangle with a length of 9.6 μm and a width of 12.8 μm is first set in any part of the surface of the propylene resin microporous film, and photographed at a magnification of ×10,000.

Each micropore formed in the measurement part is then surrounded with a rectangle in which one of the long and short sides is parallel to the stretching direction. The rectangle is adjusted so that both the long and short sides are the smallest dimension. The area of the rectangle is the aperture area of each micropore. The total aperture area S (μm²) of the micropores is calculated by adding the aperture area of each micropore together. The total aperture area S (μm²) of the micropores is divided by 122.88 μm² (9.6 μm × 12.8 μm) and then multiplied by 100 to calculate a rate of surface aperture (%). With regard to a micropore extending over a measurement part and a non-measurement part, only a portion of the micropore existing within the measurement part is considered as a subject to be measured.

When the longest diameter of aperture edges of the micropores in the propylene resin microporous film is large, a dendrite short circuit may be caused by local migration of lithium ions. Furthermore, the mechanical strength of the propylene resin microporous film may be lowered. Therefore, the longest diameter of aperture edges is 1 μm or less,

preferably 900 nm or less, and more preferably 100 to 900 nm.

When the average longer diameter of aperture edges of the micropores in the propylene resin microporous film is large, a dendrite short circuit may be caused. Therefore, the average longer diameter is 500 nm or less, preferably 400 nm or less, and more preferably 10 to 400 nm.

The longest diameter and the average longer diameter of aperture edges of the micropores in the propylene resin microporous film are measured as follows. The surface of the propylene resin microporous film is first carbon-coated. Any ten positions in the surface of the propylene resin microporous film are photographed with a scanning electron microscope at a magnification of x10,000. A photographed region is a region of plane rectangle with a length of 9.6 $\mu$m and a width of 12.8 $\mu$m in the surface of the propylene resin microporous film.

The longer diameter of aperture edges of each micropore in the photographs is measured. Of the longer diameters of the aperture edges of micropores, the maximum longer diameter is used as the longest diameter of aperture edges of the micropores. The arithmetic average of the longer diameters of aperture edges of respective micropores is used as an average longer diameter of aperture edge of the micropore. The longer diameter of aperture edge of the micropore is a diameter of a perfect circle with the smallest diameter in which the aperture edge of the micropore can be surrounded. A micropore extending over a photographing region and a non-photographing region is excluded from subjects to be measured.

The pore density of the propylene resin microporous film is 15 pores/$\mu$m$^2$ or more, and preferably 17 pores/$\mu$m$^2$ or more so that the air permeability and the rate of surface aperture are satisfied within the ranges and the size of the micropore is adjusted to a size which is hard to cause dendrite short circuits.

The pore density of a propylene resin microporous film is measured as follows. A measurement part of plane rectangle with a length of 9.6 $\mu$m and a width of 12.8 $\mu$m is first set in any part of surface of the propylene resin microporous film, and photographed at a magnification of x10,000. The number of micropores in the measurement part is counted, and the number is divided by 122.88 $\mu$m$^2$ (9.6 $\mu$m $\times$ 12.8 $\mu$m) to calculate a pore density.

A method for producing a propylene resin microporous film will next be described below. A propylene resin is supplied to an extruder, melted and kneaded, and extruded through a T-die attached to the tip of the extruder to obtain a propylene resin film (extrusion process).

When the temperature at which a propylene resin is melted and kneaded in an extruder is low, the obtained propylene resin microporous film has an ununiform thickness or a low surface smoothness. When the temperature is high, the orientation of the propylene resin may be lowered and lamellae may not be produced from the propylene resin. The temperature during melting and kneading is preferably from a temperature higher by 20°C than the melting point of the propylene resin to a temperature higher by 100°C than the melting point of the propylene resin, and more preferably from a temperature higher by 25°C than the melting point of the propylene resin to a temperature higher by 80°C than the melting point of the propylene resin.

When a propylene resin is extruded from an extruder into a film at a small draw ratio, a tension applied to the propylene resin is lowered, and the molecular orientation of the propylene resin is insufficient. Thus, lamellae may not be sufficiently produced from the propylene resin. Accordingly, the draw ratio when the propylene resin is extruded from an extruder into a film is limited to 50 or more. In contrast, when a propylene resin is extruded from an extruder into a film at a large draw ratio, the molecular orientation of the propylene resin is high, but the film stability of the propylene resin film is lowered. Therefore, the thickness precision and width precision of the obtained propylene resin film may be lowered. Accordingly, the draw ratio during extrusion of the propylene resin from an extruder into a film is preferably 50 to 300, more preferably 65 to 250, and particularly preferably 70 to 250.

The draw ratio is a value obtained by dividing the clearance of the lip of a T die by the thickness of the propylene resin film extruded from the T die. Measurement of the clearance of the lip of a T die is performed as follows. The clearance of the lip of the T die is measured at 10 or more portions using a feeler gauge in accordance with JIS B7524 (for example, JIS feeler gauge manufactured by NAGAI GAUGES), and the arithmetic average thereof is calculated. Furthermore, the thickness of a propylene resin film extruded from the T die can be obtained by measuring the thickness of the propylene resin film at 10 or more portions using, for example, a dial gauge (Signal ABS Digimatic Indicator manufactured by Mitutoyo Corporation), and calculating the arithmetic average thereof.

When the film formation rate of the propylene resin film is small, a tension applied to the propylene resin is lowered, and the molecular orientation of the propylene resin becomes insufficient. Thus, lamellae may not be sufficiently produced from the propylene resin. When the film formation rate is large, the molecular orientation of the propylene resin is high, and the film stability of the propylene resin film is lowered. Furthermore, the thickness precision and width precision of the obtained propylene resin film may be lowered. Therefore, the film formation rate is preferably 10 to 300 m/min, more preferably 15 to 250 m/min, and particularly preferably 15 to 30 m/min.

The propylene film resin having been extruded from a T-die is cooled until the surface temperature thereof is equal to or lower than a temperature lower by 100°C than the melting point of the propylene resin. Thus, the propylene resin forming the propylene resin film is crystallized to produce lamellae. In the present invention, a melt-kneaded propylene resin is extruded at a predetermined draw ratio to orient the molecules of the propylene resin forming the propylene resin film in advance. The propylene resin film with this state is then cooled to promote the production of lamellae in a part where the propylene resin is oriented. Furthermore, crystallized parts (lamellae) and uncrystallized parts are arranged alternately in the extrusion direction of the propylene resin film to form a lamellar structure.

The surface temperature of the cooled propylene resin film is preferably equal to, or lower than, a temperature lower than the melting point of the propylene resin by 100°C, more preferably by 140 to 110°C, and particularly preferably by 135 to 120°C. When the surface temperature of the cooled propylene resin film is high, the propylene resin forming the propylene resin film cannot be sufficiently crystallized and lamellae may be not produced.

Subsequently, the obtained propylene resin film is aged (aging process). The aging process of the propylene resin is performed to grow lamellae produced in the propylene resin film during the extrusion process. In the stretching process of the propylene resin film to be described later, a crack is formed not within the lamellae but between the lamellae. Starting from the crack, a micro through pore (micropore) can be formed.

When the aging temperature of the propylene resin film is low, lamellae cannot be grown sufficiently. In the stretching process of the propylene resin film, a micro through pore is hardly formed between the lamellae. When the aging temperature is high, the molecular orientation of the propylene resin in the propylene resin film is loosened, and a lamellar structure may be broken. Therefore, the aging temperature is limited to from a temperature lower by 30°C than the melting point of the propylene resin to a temperature lower by 1°C than the melting point of the propylene resin, preferably from a temperature lower by 30°C than the melting point of the propylene resin to a temperature lower by 5°C than the melting point of the propylene resin, and more preferably from a temperature lower by 25°C than the melting point of the propylene resin to a temperature lower by 5°C than the melting point of the propylene resin.

The aging temperature of the propylene resin film is the surface temperature of the propylene resin film. When the surface temperature of the propylene resin film cannot be measured, for example, when the propylene resin film is wound into a roll and aged as described below, the aging temperature of the propylene resin film is a temperature of the atmosphere where the propylene resin film is placed. For example, when a propylene resin film is wound into a roll and aged in a heating device such as an air heating furnace, the aging temperature is a temperature of the atmosphere where the propylene resin film is placed in a heating device.

When the aging time of the propylene resin film is short, lamellae cannot be grown sufficiently. In the stretching process of the propylene resin film, a micro through pore is hardly formed between the lamellae. Therefore, a sufficient time should be ensured for the aging. Accordingly, the aging time of the propylene resin film is limited to one minute or more.

A propylene resin film may be aged while the propylene resin film is allowed to travel. Alternatively, a propylene resin film wound in a roll may be aged. In particular, it is preferable that the propylene resin film wound in a roll is aged.

When the propylene resin film is aged while the propylene resin film is allowed to travel, the propylene resin film needs to be allowed to travel at a certain tension applied to the propylene resin film in a traveling direction to prevent the propylene resin film from sagging. When the propylene resin film is aged while it is allowed to travel as described above, the propylene resin film is elongated by the tension applied to the propylene resin film. Thus, the lamellae produced in the propylene resin film during the extrusion process may be destroyed, and growth of the lamellae may not progress sufficiently. Even when such a propylene resin film in which lamellae are not sufficiently grown is stretched in the stretching process, through pores cannot sufficiently be formed in the propylene resin film. Thus, a propylene resin microporous film through which lithium ions can pass smoothly and uniformly may not be obtained. In contrast, when the propylene resin film is aged after it is wound into a roll, an excess tension is not applied to the propylene resin film. This highly suppresses damage of the lamellae formed in the propylene resin film during the extrusion process, and enables the lamellae of the propylene resin film to grow sufficiently. After aging, the propylene resin film may be unwound from the wound roll of the propylene resin film and be subjected to the stretching process.

When the propylene resin film is aged while the propylene resin film is allowed to travel, the aging time of the propylene resin film is limited to one minute or more, and more preferably 5 minutes to 60 minutes.

When the propylene resin film is aged after it is wound into a roll, the aging time is preferably one hour or more, and more preferably 15 hours or more. When the propylene resin film is wound into a roll and is aged for such an aging time, the propylene resin film can sufficiently be aged while the temperatures from the inside to the outer surface of the roll are entirely maintained at the above-described aging temperature. Thus, lamellae in the propylene resin film can sufficiently be allowed to be grown. When the aging time is too long, the growth of lamellae in the propylene resin film corresponding to an increase in the aging time may not be expected. Rather, the propylene resin film may be thermally degraded. Therefore, the aging time is preferably 35 hours or less, and more preferably 30 hours or less.

In the method of the present invention, in the extrusion process a propylene resin melted and kneaded is extruded at a predetermined draw ratio to obtain a propylene resin film having a high molecular orientation of the propylene resin. The propylene resin film is cooled to produce lamellae in the propylene resin film. In the aging process, the propylene resin film is aged under the above-described conditions to grow the lamellae. Thus, the thickness of the lamellae can be increased in the extrusion direction of the propylene resin film. The lamellae in the propylene resin film obtained in the above-described extrusion and aging processes can be sufficiently grown to enhance the crystallinity. Thus, the resulting propylene resin film can have the amount of heat of fusion determined by DSC of 110 mJ/mg or more, and the birefringence of $1.4 \times 10^{-2}$ or more.

Furthermore, the lamellae in the propylene resin film after the aging process can be sufficiently grown to enhance the crystallinity. Thus, the elastic recovery rate at 100% elongation can be 95% or more.

The aged propylene resin film is stretched (stretching process). It is preferable that the stretching process include a first stretching process and a second stretching process subsequent to the first stretching process. In the first stretching process, the propylene resin film is uniaxially stretched preferably only in the extrusion direction.

In the first stretching process, the lamellae in the propylene resin film are hardly melted. The lamellae are separated from each other by stretching to independently form fine clacks with efficiency in an uncrystallized part between the lamellae. Starting from the cracks, many micropores are formed with reliability.

In the first stretching process, when the surface temperature of the propylene resin film is low, the propylene resin film may be ruptured during stretching. When the surface temperature is high, a crack is difficult to be generated in the uncrystallized part between the lamellae. Therefore, the surface temperature is preferably -20 to 100°C, and more preferably 0 to 80°C.

In the first stretching process, when the stretching ratio of the propylene resin film is small, the micropores are difficult to be formed in the uncrystallized part between the lamellae. When the stretching ratio is large, the micropores may not be uniformly formed in the propylene resin microporous film. Therefore, the stretching ratio is preferably 1.05 to 1.60, and more preferably 1.10 to 1.50.

In the present invention, the stretching ratio of the propylene resin film is a value obtained by dividing the length of a stretched propylene resin film by the length of the propylene resin film before stretched.

When the stretching rate of the propylene resin film in the first stretching process is small, the micropores are difficult to be uniformly formed in the uncrystallized part between the lamellae. Therefore, the stretching rate is preferably 20%/min or more. When the stretching rate is too large, the propylene resin film may be ruptured. Therefore, the stretching rate is more preferably 20 to 3,000%/min, and particularly preferably 20 to 70%/min.

In the present invention, the stretching rate of the propylene resin film is a rate of change of a dimension of the propylene resin film per unit time in the stretching direction thereof.

The type of method of stretching the propylene resin film in the first stretching process to be used is not particularly limited as long as the propylene resin film can be uniaxially stretched. Examples thereof may include a method of uniaxially stretching the propylene resin film at a predetermined temperature using a uniaxial stretching device.

Subsequently, the propylene resin film uniaxially stretched in the first stretching process is preferably subjected to uniaxially stretching treatment (second stretching process) under a condition where the surface temperature of the propylene resin film is higher than that of the propylene resin film during uniaxial stretching in the first stretching process and equal to or lower than a temperature lower by 10 to 100°C than the melting point of the propylene resin. In the second stretching process, the propylene resin film is uniaxially stretched preferably only in the extrusion direction. As described above, the propylene resin film is subjected to stretching treatment in the same direction as in the first stretching process at a surface temperature higher than that of the propylene resin film in the first stretching process. Thus, many micropores formed in the propylene resin film during the first stretching process can be grown.

In the second stretching process, when the surface temperature of the propylene resin film is low, the micropores formed in the propylene resin film during the first stretching process are difficult to be grown, and the air permeability of the propylene resin microporous film may not be improved. When the surface temperature is high, the micropores formed in the propylene resin film during the first stretching process are blocked and the air permeability of the propylene resin microporous film may be decreased. Therefore, the surface temperature of the propylene resin film is preferably higher than that of the propylene resin film in the first stretching process and equal to or lower than a temperature lower by 10 to 100°C than the melting point of the propylene resin, and more preferably higher than that of the propylene resin film in the first stretching process and equal to or lower than a temperature lower by 15 to 80°C than the melting point of the propylene resin.

In the second stretching process, when the stretching ratio of the propylene resin film is small, the micropores formed in the propylene resin film during the first stretching process are difficult to be grown, and the air permeability of the propylene resin microporous film may be decreased. When the stretching ratio is large, the micropores formed in the propylene resin film during the first stretching process are blocked, and the air permeability of the propylene resin microporous film may be decreased. Therefore, the stretching ratio is preferably 1.05 to 3, and more preferably 1.8 to 2.5.

In the second stretching process, when the stretching rate of the propylene resin film is large, the micropores may not be uniformly formed in the propylene resin film. Therefore, the stretching rate is preferably 500%/min or less, more preferably 400%/min or less, and particularly preferably 60%/min or less. Furthermore, when the stretching rate of the propylene resin film is small, the micropores are difficult to be uniformly formed in the uncrystallized part between the lamellae. Therefore, the stretching rate is preferably 15%/min or more.

The type of method of stretching the propylene resin film in the second stretching process to be used is not particularly limited as long as the propylene resin film can be uniaxially stretched. Examples thereof may include a method of uniaxially stretching the propylene resin film at a predetermined temperature using a uniaxial stretching device.

The propylene resin film having uniaxially been stretched in the second stretching process is annealed (annealing process). In the annealing process, the remained strain caused by stretching the propylene resin film in the stretching process is relaxed to suppress the occurrence of heat shrinkage of the obtained propylene resin microporous film due to heat.

When the surface temperature of the propylene resin film in the annealing process is low, the strain remained in the propylene resin film is not sufficiently relaxed, and the dimensional stability of the obtained propylene resin microporous film may be decreased during heating. When the surface temperature is high, the micropores formed in the stretching process may be blocked. Therefore, the surface temperature in the annealing process is preferably from a temperature higher than the surface temperature of the propylene resin film in the second stretching process to a temperature lower by 10°C than the melting point of the propylene resin.

When the degree of shrinkage of the propylene resin film in the annealing process is large, the propylene resin film may sag not to be uniformly annealed or not to maintain the shape of the micropores. Therefore, the degree of shrinkage is preferably set to 30% or less. Note that the degree of shrinkage of the propylene resin film is a value obtained by dividing the length of shrinkage of the propylene resin film in the stretching direction during the annealing process by the length of the propylene resin film in the stretching direction after the second stretching process and multiplying the resultant by 100.

The obtained propylene resin microporous film has many micropores which pass through the film and excellent air permeability. For example, when the propylene resin microporous film is used for a separator of a lithium ion battery, lithium ions can pass through the propylene resin microporous film smoothly and uniformly. Therefore, the lithium ion battery exhibits excellent battery performance.

In addition, since the propylene resin microporous film has many independent micropores formed therein, the above-mentioned excellent air permeability is maintained. Therefore, lithium ions easily pass through the film smoothly and uniformly, dendrites are difficult to be produced, and the mechanical strength of the film is excellent. Even if dendrites of lithium are produced on the end face of a negative electrode by charge and discharge of a lithium ion battery, the dendrites do not break through the propylene resin microporous film, and a dendrite short circuit is prevented with reliability. Therefore, problems such as degradation of battery capacity can be prevented previously. Advantageous Effects of Invention

The propylene resin microporous film of the present invention with the above-described configuration can have excellent air permeability. For example, when the propylene resin microporous film is used for a lithium ion battery, lithium ions are allowed to pass through the film smoothly and uniformly, and the lithium ion battery has excellent battery performance. In addition, a dendrite short circuit can practically be prevented. Thus, a lithium ion battery having a stable battery performance over a long period of time can be configured.

In particular, when the propylene resin microporous film of the present invention is used for a separator, a high-performance lithium ion battery in which a rapid decrease in discharge capacity and occurrence of a dendrite short circuit can practically be prevented even in application of high output power battery can be configured.

According to the method for producing a propylene resin microporous film of the present invention, the above-described propylene resin microporous film can be produced easily. Description of Embodiments

Hereinafter Examples of the present invention will be described. The present invention is not limited to Examples.

(Examples 1 to 3 and Comparative Examples 1 to 4, and 6)

A homopolypropylene having the weight average molecular weight, the number average molecular weight, the melting point, and the amount of heat of fusion determined by DSC, which are shown in Table 1, was supplied to an extruder, melted and kneaded at a resin temperature of 200°C, extruded through a T-die attached to the tip of the extruder into a film, and cooled to 30°C to obtain a homopolypropylene film having a thickness of 30 μm and a width of 200 mm. The extruded rate was 10 kg/h, the film formation rate was 22 m/min, and the draw ratio was 83.

The resulting homopolypropylene film was supplied to an air heating furnace, and aged over 24 hours so that the surface temperature thereof was a temperature shown in Table 1 (aging process). The surface temperature of the homopolypropylene film in the aging process is described in the column titled as "AGING TEMPERATURE" of Table 1.

The homopolypropylene film was cut into a strip shape of 300 mm in the extrusion direction and 160 mm in the width direction. The homopolypropylene film was uniaxially stretched at a stretching rate of 50%/min and a stretching ratio of 1.2 only in the extrusion direction with a uniaxial stretching device ("IMC-18C6" manufactured by Imoto Machinery Co., Ltd.) so that the surface temperature became 23°C (first stretching process).

Subsequently, the homopolypropylene film was uniaxially stretched at a stretching rate of 42%/min and a stretching ratio of 2 only in the extrusion direction with a uniaxial stretching device ("IMC-18C6" manufactured by Imoto Machinery Co., Ltd.) so that the surface temperature became 120°C (second stretching process).

Subsequently, the homopolypropylene film was left over 10 minutes so that the surface temperature became 130°C and a tension was not applied to the homopolypropylene film, so as to be annealed to obtain a propylene resin microporous film having a thickness of 25 $\mu$m (annealing process). The degree of shrinkage of the homopolypropylene film in the annealing process was 20%.

(Example 4)

A propylene resin microporous film was obtained in the same manner as in Example 2 except that the surface temperature of the homopolypropylene film was changed to 130°C and the stretching ratio was changed to 1.8 in the second stretching process, and the surface temperature of the homopolypropylene film was changed to 150°C and the degree of shrinkage was changed to 10% in the annealing process.

(Comparative Example 5)

A propylene resin microporous film was obtained in the same manner as in Example 2 except that the surface temperature of the homopolypropylene film was changed to 120°C in the aging process, the surface temperature of the homopolypropylene film was changed to 110°C and the stretching ratio was changed to 1.1 in the second stretching process, and the surface temperature of the homopolypropylene film was changed to 150°C and the degree of shrinkage was changed to 10% in the annealing process.

(Examples 5 to 12 and Comparative Examples 7 to 14, and 16)

A homopolypropylene having the weight average molecular weight, the number average molecular weight, the melting point, and the amount of heat of fusion determined by DSC, which are shown in Tables 2 and 3, was supplied to an extruder, melted and kneaded at a resin temperature of 200°C, extruded through a T-die attached to the tip of the extruder into a film, and cooled to 30°C to obtain an elongated homopolypropylene film having a thickness of 30 $\mu$m and a width of 200 mm (extrusion process). The extruded rate, film formation rate, and draw ratio are each shown in Tables 2 and 3.

The resulting elongated homopolypropylene film having a length of 100 m was wound around a cylindrical core having an outer diameter of 96 mm into a roll. The wound homopolypropylene film was left over 24 hours in an air heating furnace at an atmospheric temperature, shown in Tables 2 and 3, of the place where the homopolypropylene film was disposed in the furnace, to be aged (aging process). At this time, the overall temperatures extending from the inside to the outer surface of the roll of the elongated homopolypropylene film were the same as the temperature in the air heating furnace. The atmospheric temperature of the place where the homopolypropylene film was disposed in the air heating furnace is described in the column titled as "AGING TEMPERATURE" of Tables 2 and 3.

Then, the aged homopolypropylene film wound in a roll shape was unwound and cut into a strip shape of 300 mm in the extrusion direction (longitudinal direction) and 160 mm in the width direction. The homopolypropylene film was uniaxially stretched at a stretching rate of 50%/min and a stretching ratio of 1.2 only in the extrusion direction with a uniaxial stretching device ("IMC-18C6" manufactured by Imoto Machinery Co., Ltd.) so that the surface temperature became 23°C (first stretching process).

Subsequently, the homopolypropylene film was uniaxially stretched at a stretching rate of 42%/min and a stretching ratio of 2 only in the extrusion direction with a uniaxial stretching device ("IMC-18C6" manufactured by Imoto Machinery Co., Ltd.) so that the surface temperature became 120°C (second stretching process).

Subsequently, the homopolypropylene film was left over 10 minutes so that the surface temperature became 130°C and a tension was not applied to the homopolypropylene film, so as to be annealed to obtain a propylene resin microporous film having a thickness of 25 $\mu$m (annealing process). The degree of shrinkage of the homopolypropylene film in the annealing process was 20%.

(Comparative Example 15)

A homopolypropylene having the weight average molecular weight, the number average molecular weight, the melting point, and the amount of heat of fusion determined by DSC, which are shown in Table 3, was supplied to an extruder, melted and kneaded at a resin temperature of 200°C, extruded through a T-die attached to the tip of the extruder into a film, and cooled to 30°C to obtain an elongated homopolypropylene film having a thickness of 30 $\mu$m and a width of 200 mm (extrusion process). The extruded rate was 12 kg/h, the film formation rate was 22 m/min, and the draw ratio was 70.

The resulting elongated homopolypropylene film was supplied to an air heating furnace. While the homopolypropylene film was allowed to travel, the film was aged over 55 seconds so that the surface temperature thereof became 150°C (aging process).

The homopolypropylene film was cut into a strip shape of 300 mm in the extrusion direction (longitudinal direction) and 160 mm in the width direction. The homopolypropylene film was uniaxially stretched at a stretching rate of 50%/min and a stretching ratio of 1.2 only in the extrusion direction with a uniaxial stretching device ("IMC-18C6" manufactured by Imoto Machinery Co., Ltd.) so that the surface temperature became 23°C (first stretching process).

Subsequently, the homopolypropylene film was uniaxially stretched at a stretching rate of 42%/min and a stretching ratio of 2 only in the extrusion direction with a uniaxial stretching device ("IMC-18C6" manufactured by Imoto Machinery Co., Ltd.) so that the surface temperature became 120°C (second stretching process).

Subsequently, the homopolypropylene film was left over 10 minutes so that the surface temperature became 130°C and a tension was not applied to the homopolypropylene film, so as to be annealed to obtain a homopolypropylene resin microporous film having a thickness of 25 $\mu$m (annealing process). The degree of shrinkage of the homopolypropylene film in the annealing process was 20%.

The amount of heat of fusion determined by DSC, the birefringence, and the elastic recovery rate at 100% elongation of the homopolypropylene films aged in the aging process in Examples 1 to 12 and Comparative Examples 1 to 16 were measured as described above. Furthermore, the degree of air permeability, the longest diameter and the average longer diameter of aperture edges of the micropores, the pore density, and the rate of surface aperture of the homopolypropylene microporous films obtained in Examples 1 to 12 and Comparative Examples 1 to 16 were measured as described above. These results are shown in Tables 1 to 3.

However, since micropores were hardly formed in the homopolypropylene microporous films obtained in Comparative Examples 13 and 14, it was impossible to measure the longest diameter and average longer diameter of opening edge of the micropores.

Using each of the homopolypropylene microporous films obtained in Examples 1, 4, 5, 8, and 9, and Comparative Examples 3, 5, 6, 9, 11, 12, and 15 as a battery separator, a lithium ion battery was produced. The initial resistance value, and the discharge capacities at 1 C and 5 C of the lithium ion battery were measured as described below. The results thereof are shown in Tables 1 to 3.

An aluminum foil was used as a positive electrode collector. A composition for formation of a positive electrode including 92% by weight of $LiMn_2O_4$ (average particle diameter: 26 $\mu$m) as a positive electrode active material, 4% by weight of carbon black as a conducting agent, and 4% by weight of poly(vinylidene fluoride) as a binder resin was applied to the surface of the aluminum foil with a comma coater to produce a positive electrode.

An electrolytic copper foil was used as a negative electrode collector. A composition for formation of a negative electrode including 91% by weight of graphite particles as a negative electrode active material, 5% by weight of carbon black as a conducting agent, and 4% by weight of poly(vinylidene fluoride) as a binder resin was applied to the surface of the electrolytic copper foil with a comma coater to produce a negative electrode.

The positive and negative electrodes were each cut into a plane rectangle with a length of 30 mm and a width of 60 mm, and the positive and negative electrodes were overlaid with a homopolypropylene microporous film interposed therebetween to form a layered body. A tab was disposed on each of the electrodes, and the layered body was dried under reduced pressure at 80°C over 12 hours.

After drying the layered body under reduced pressure, the layered body was packed in a casing material, and an electrolytic solution was poured into the case under an argon gas atmosphere. Then, the layered body was vacuum-sealed using a casing material to produce a battery cell. The electrolytic solution used herein was a solution of $LiPF_6$ (1 mol/L) in a solvent of a 3:7 (by volume) mixture of ethylene carbonate and ethylmethyl carbonate.

The AC impedance (initial resistance value) of the battery cell was measured. In the measurement of AC impedance, a measurement system "IM-6 Impendance Analyzer" available from BAS-ZAHNER was used. The measurement frequency was 100 mHz to 1 MHz, and the applied voltage was 10 mV. After adjustment of charge of the battery cell at 3.8 V, the battery cell was evaluated. The measured AC impedances (initial resistance values) were shown in Tables 1 to 3.

For comparison of high rate characteristics, the battery cell was charged at a voltage of 4.2 V and a current corresponding to 0.2 C in a constant-temperature chamber at 20°C, and discharged at a voltage of 2.7 V and a current corresponding 1 C or 5 C. The discharge capacity of the battery cell under this condition was measured. The discharge capacity at 5 C was divided by the discharge capacity at 1 C and then multiplied by 100 to obtain a discharge capacity keeping rate. The results are shown in Tables 1 to 3.

Table 1

| | | EXAMPLE 1 | EXAMPLE 2 | EXAMPLE 3 | EXAMPLE 4 | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 |
|---|---|---|---|---|---|---|---|---|---|---|---|
| HOMOPOLYPROPYLENE | WEIGHT AVERAGE MOLECULAR WEIGHT Mw | 413000 | 427000 | 390000 | 427000 | 375000 | 375000 | 330000 | 427000 | 427000 | 428000 |
| | NUMBER AVERAGE MOLECULAR WEIGHT Mn | 44300 | 45100 | 48800 | 45100 | 62300 | 62300 | 49900 | 45100 | 45100 | 101000 |
| | MOLECULAR WEIGHT DISTRIBUTION (Mw/Mn) | 9.3 | 9.5 | 8.0 | 9.5 | 6.0 | 6.0 | 6.6 | 9.5 | 9.5 | 4.3 |
| | MELTING POINT (°C) | 163 | 165 | 165 | 165 | 165 | 165 | 161 | 165 | 165 | 165 |
| | AMOUNT OF HEAT OF FUSION (mJ/mg) | 96 | 93 | 100 | 93 | 96 | 96 | 76 | 93 | 93 | 70 |
| EXTRUSION PROCESS | EXTRUDED RATE (kg/h) | 10 | 10 | 10 | 10 | 10 | 10 | 10 | 10 | 10 | 10 |
| | FILM FORMATION RATE (m/min) | 22 | 22 | 22 | 22 | 22 | 22 | 22 | 22 | 22 | 22 |
| | DRAW RATIO | 83 | 83 | 83 | 83 | 83 | 83 | 83 | 83 | 83 | 83 |
| AGING CONDITIONS | AGING TEMPERATURE (°C) | 150 | 150 | 150 | 150 | 150 | 120 | 120 | 100 | 120 | 120 |
| | AGING TIME | 24 H | 24 H | 24 H | 24 H | 24 H | 24 H | 24 H | 24 H | 24 H | 24 H |

| | | EXAM- PLE 1 | EXAM- PLE 2 | EXAM- PLE 3 | EXAM- PLE 4 | COMPARA- TIVE EXAM- PLE 1 | COMPARA- TIVE EXAM- PLE 2 | COMPARA- TIVE EXAM- PLE 3 | COMPARA- TIVE EXAM- PLE 4 | COMPARA- TIVE EXAM- PLE 5 | COMPARA- TIVE EXAM- PLE 6 |
|---|---|---|---|---|---|---|---|---|---|---|---|
| HOMOPOLYPRO- PYLENE FILM | AMOUNT OF HEAT OF FUSION (mJ/mg) | 114 | 113 | 112 | 112 | 112 | 106 | 112 | 111 | 105 | 104 |
| | BIREFRIN- GENCE ($\times 10^{-2}$) | 1.9 | 1.9 | 1.8 | 1.9 | 1.8 | 1.5 | 1.6 | 1.8 | 1.4 | 1.4 |
| | ELASTIC RECOVERY RATE (%) | 95 | 95 | 95 | 95 | 94 | 88 | 94 | 93 | 84 | 83 |
| PROPYLENE RESIN MICROPOROUS FILM | DEGREE OF AIR PERMEABILITY (s/100mL) | 140 | 150 | 190 | 180 | 190 | 450 | 200 | 242 | 580 | 600 |
| | RATE OF SUR- FACE APER- TURE (%) | 36 | 36 | 32 | 33 | 27 | 16 | 26 | 24 | 17 | 13 |
| | LONGEST DIAMETER (nm) | 620 | 450 | 450 | 550 | 550 | 400 | 1020 | 600 | 280 | 300 |
| | AVERAGE LONGER DIAMETER (nm) | 380 | 230 | 240 | 270 | 270 | 240 | 550 | 240 | 141 | 140 |
| | PORE DENSITY (PORES/m²) | 20 | 32 | 30 | 23 | 18 | 13 | 5 | 22 | 31 | 25 |

(continued)

| | | EXAMPLE 1 | EXAMPLE 2 | EXAMPLE 3 | EXAMPLE 4 | COMPARATIVE EXAMPLE 1 | COMPARATIVE EXAMPLE 2 | COMPARATIVE EXAMPLE 3 | COMPARATIVE EXAMPLE 4 | COMPARATIVE EXAMPLE 5 | COMPARATIVE EXAMPLE 6 |
|---|---|---|---|---|---|---|---|---|---|---|---|
| BATTERY CHARACTERISTICS | INITIAL RESISTANCE VALUE (mΩ) | 125 | - | - | 128 | - | - | 146 | - | 171 | 177 |
| | DISCHARGE CAPACITY AT 1C (mAh) | 63 | - | - | 62 | - | - | 60 | - | 62 | 62 |
| | DISCHARGE CAPACITY AT 50 (mAh) | 44 | - | - | 44 | - | - | 39 | - | 38 | 37 |
| | DISCHARGE CAPACITY KEEPING RATE (%) | 70 | - | - | 71 | - | - | 65 | - | 61 | 60 |

Table 2

| | | EXAMPLE 5 | EXAMPLE 6 | EXAMPLE 7 | EXAMPLE 8 | EXAMPLE 9 | EXAMPLE 10 | EXAMPLE 11 | EXAMPLE 12 |
|---|---|---|---|---|---|---|---|---|---|
| HOMOPOLYPROPYLENE | WEIGHT AVERAGE MOLECULAR WEIGHT Mw | 413000 | 427000 | 390000 | 427000 | 413000 | 413000 | 281000 | 480000 |
| | NUMBER AVERAGE MOLECULAR WEIGHT Mn | 44300 | 45100 | 48800 | 45100 | 44300 | 44300 | 33000 | 42000 |
| | MOLECULAR WEIGHT DISTRIBUTION (Mw/Mn) | 9.3 | 9.5 | 8.0 | 9.5 | 9.3 | 9.3 | 8.5 | 11.4 |
| | MELTING POINT (°C) | 163 | 165 | 165 | 165 | 163 | 163 | 165 | 162 |
| | AMOUNT OF HEAT OF FUSION (mJ/mg) | 96 | 93 | 100 | 93 | 96 | 96 | 96 | 95 |
| EXTRUSION PROCESS | EXTRUDED RATE (kg/h) | 10 | 10 | 10 | 10 | 12 | 12 | 12 | 12 |
| | FILM FORMATION RATE (m/min) | 22 | 22 | 22 | 22 | 22 | 22 | 22 | 22 |
| | DRAW RATIO | 83 | 83 | 83 | 83 | 70 | 70 | 70 | 70 |
| AGING CONDITIONS | SHAPE DURING AGING | ROLL | ROLL | ROLL | ROLL | ROLL | ROLL | ROLL | ROLL |
| | AGING TEMPERATURE (°C) | 150 | 150 | 150 | 150 | 155 | 150 | 140 | 140 |
| | AGING TIME | 24 H | 24 H | 24 H | 24 H | 24 H | 24 H | 24 H | 24 H |

| | | EXAMPLE 5 | EXAMPLE 6 | EXAMPLE 7 | EXAMPLE 8 | EXAMPLE 9 | EXAMPLE 10 | EXAMPLE 11 | EXAMPLE 12 |
|---|---|---|---|---|---|---|---|---|---|
| HOMOPOLYPROPYLENE FILM | AMOUNT OF HEAT OF FUSION (mJ/mg) | 114 | 113 | 112 | 112 | 112 | 110 | 110 | 111 |
| | BIREFFINGENCE ($\times 10^{-2}$) | 1.9 | 1.9 | 1.8 | 1.9 | 1.6 | 1.6 | 1.5 | 1.8 |
| | ELASTIC RECOVERY RATE (%) | 95 | 95 | 95 | 95 | 97 | 96 | 95 | 95 |
| PROPYLENE RESIN MICROPOROUS FILM | DEGREE OF AIR PERMEABILITY (s/100mL) | 140 | 150 | 190 | 180 | 135 | 140 | 250 | 200 |
| | RATE OF SURFACE APERTURE (%) | 36 | 35 | 32 | 33 | 38 | 36 | 30 | 33 |
| | LONGEST DIAMETER (nm) | 620 | 450 | 450 | 550 | 600 | 570 | 420 | 460 |
| | AVERAGE LONGER DIAMETER (nm) | 380 | 230 | 240 | 270 | 360 | 350 | 210 | 240 |
| | PORE DENSITY (PORES/m$^2$) | 20 | 32 | 30 | 23 | 28 | 25 | 18 | 20 |
| BATTERY CHARACTERISTICS | INITIAL RESISTANCE VALUE (m$\Omega$) | 125 | - | - | 128 | 123 | - | - | - |
| | DISCHARGE CAPACITY AT 1C (mAh) | 63 | - | - | 62 | 63 | - | - | - |
| | DISCHARGE CAPACITY AT 5C (mAh) | 44 | - | - | 44 | 45 | - | - | - |
| | DISCHARGE CAPACITY KEEPING RATE (%) | 70 | - | - | 71 | 71 | - | - | - |

Table 3

| | | COMPARATIVE EXAMPLE 7 | COMPARATIVE EXAMPLE 8 | COMPARATIVE EXAMPLE 9 | COMPARATIVE EXAMPLE 10 | COMPARATIVE EXAMPLE 11 | COMPARATIVE EXAMPLE 12 | COMPARATIVE EXAMPLE 13 | COMPARATIVE EXAMPLE 14 | COMPARATIVE EXAMPLE 15 | COMPARATIVE EXAMPLE 16 |
|---|---|---|---|---|---|---|---|---|---|---|---|
| HOMOPOLYPROPYLENE | WEIGHT AVERAGE MOLECULAR WEIGHT Mw | 375000 | 375000 | 330000 | 427000 | 427000 | 428000 | 413000 | 413000 | 413000 | 413000 |
| | NUMBER AVERAGE MOLECULAR WEIGHT Mn | 62300 | 62300 | 49900 | 45100 | 45100 | 101000 | 44300 | 44300 | 44300 | 44300 |
| | MOLECULAR WEIGHT DISTRIBUTION (Mw/Mn) | 6.0 | 6.0 | 6.6 | 9.5 | 9.5 | 4.3 | 9.3 | 9.3 | 9.3 | 9.3 |
| | MELTING POINT (°C) | 165 | 165 | 161 | 165 | 165 | 165 | 163 | 163 | 163 | 163 |
| | AMOUNT OF HEAT OF FUSION (mJ/mg) | 96 | 96 | 76 | 93 | 93 | 70 | 96 | 96 | 96 | 96 |
| EXTRUSION PROCESS | EXTRUDED RATE (kg/h) | 10 | 10 | 10 | 10 | 10 | 10 | 12 | 12 | 12 | 6 |
| | FILM FORMATION RATE (m/min) | 22 | 22 | 22 | 22 | 22 | 22 | 22 | 22 | 22 | 11 |
| | DRAW RATIO | 83 | 83 | 83 | 83 | 83 | 83 | 70 | 70 | 70 | 35 |
| AGING CONDITIONS | SHAPE DURING AGING | ROLL | ROLL | ROLL | ROLL | ROLL | ROLL | ROLL | ROLL | TRAVELING | ROLL |
| | AGING TEMPERATURE (°C) | 150 | 120 | 120 | 100 | 120 | 120 | 25 | 118 | 160 | 150 |
| | AGING TIME | 24 H | 24 H | 24 H | 24 H | 24 H | 24 H | 24 H | 24 H | 55 SEC | 24 H |

EP 2 607 414 B1

(continued)

| | | COMPARATIVE EXAMPLE 7 | COMPARATIVE EXAMPLE 8 | COMPARATIVE EXAMPLE 9 | COMPARATIVE EXAMPLE 10 | COMPARATIVE EXAMPLE 11 | COMPARATIVE EXAMPLE 12 | COMPARATIVE EXAMPLE 13 | COMPARATIVE EXAMPLE 14 | COMPARATIVE EXAMPLE 15 | COMPARATIVE EXAMPLE 16 |
|---|---|---|---|---|---|---|---|---|---|---|---|
| HOMOPOLYPRO-PYLENE FILM | AMOUNT OF HEAT OF FUSION (mJ/mg) | 112 | 106 | 112 | 111 | 105 | 104 | 92 | 100 | 102 | 111 |
| | BIREFRINGENCE ($\times 10^{-2}$) | 1.8 | 1.5 | 1.8 | 1.8 | 1.4 | 1.4 | 1.0 | 1.2 | 1.7 | 1.3 |
| | ELASTIC RECOVERY RATE (%) | 94 | 88 | 94 | 93 | 84 | 83 | 73 | 93 | 94 | 94 |
| PROPYLENE RESIN MICROPOROUS FILM | DEGREE OF AIR PERMEABILITY (s/100mL) | 190 | 450 | 200 | 242 | 580 | 600 | 50000 or more | 30000 | 790 | 990 |
| | RATE OF SURFACE APERTURE (%) | 27 | 16 | 26 | 24 | 17 | 13 | 1 OR LESS | 5 OR LESS | 23 | 25 |
| | LONGEST DIAMETER (nm) | 550 | 400 | 1020 | 600 | 280 | 300 | - | - | 1010 | 540 |
| | AVERAGE LONGER DIAMETER (nm) | 270 | 240 | 550 | 240 | 141 | 140 | - | - | 280 | 300 |
| | PORE DENSITY (PORES/$\mu$m$^2$) | 18 | 13 | 5 | 22 | 31 | 25 | 5 OR LESS | 5 OR LESS | 14 | 25 |

| | | COMPARA-TIVE EXAM-PLE 7 | COMPARA-TIVE EXAM-PLE 8 | COMPARA-TIVE EXAM-PLE 9 | COMPARA-TIVE EXAM-PLE 10 | COMPARA-TIVE EXAM-PLE 11 | COMPARA-TIVE EXAM-PLE 12 | COMPARA-TIVE EXAM-PLE 13 | COMPARA-TIVE EXAM-PLE 14 | COMPARA-TIVE EXAM-PLE 15 | COMPARA-TIVE EXAM-PLE 16 |
|---|---|---|---|---|---|---|---|---|---|---|---|
| BATTERY CHAR-ACTERISTICS | INITIAL RE-SISTANCE VALUE (mΩ) | - | - | 146 | - | 171 | 177 | - | - | 174 | - |
| | DISCHARGE CAPACITY AT 1C (mAh) | - | - | 60 | - | 62 | 62 | - | - | 60 | - |
| | DISCHARGE CAPACITY AT 5C (mAh) | - | - | 39 | - | 38 | 37 | - | - | 39 | - |
| | DISCHARGE CAPACITY KEEPING RATE (%) | - | - | 65 | - | 61 | 60 | - | - | 65 | - |

EP 2 607 414 B1

Industrial Applicability

The propylene resin microporous film of the present invention is used for a separator to provide a lithium ion battery capable of being charged and discharged rapidly, and stably maintaining excellent power generation performance over a long period of time by suppressing the occurrence of a dendrite short circuit.

**Claims**

1. A propylene resin microporous film, having micropores formed by uniaxially stretching a propylene resin film, and having an air permeability of 100 to 400 s/100 mL, and a rate of surface aperture of 30 to 55%, wherein the propylene resin has a molecular weight distribution (weight average molecular weight / number average molecular weight) of 7.5 to 12.0, wherein the propylene resin has a weight average molecular weight of 250,000 to 500,000 and a melting point of 160 to 170°C,
   wherein the longest diameter of aperture edges of the micropores is 1 $\mu$m or less, and the average longer diameter of the aperture edges is 500 nm or less,
   wherein a pore density is 15 pores/$\mu$m$^2$ or more.

2. The propylene resin microporous film according to claim 1, wherein the propylene resin film has an amount of heat of fusion of 110 mJ/mg or more determined by differential scanning calorimetry, and a birefringence of $1.4 \times 10^{-2}$ or larger.

3. The propylene resin microporous film according to claim 1, wherein the propylene resin film has an elastic recovery rate at 100% elongation of 95% or more.

4. A battery separator, comprising the propylene resin microporous film according to claim 1.

5. A battery into which the battery separator according to claim 4 is incorporated.

6. A method for producing a propylene resin microporous film, comprising: an extrusion step of supplying a propylene resin to an extruder and melting and kneading the propylene resin, and extruding the propylene film resin through a T-die attached to a tip of the extruder with a draw ratio of 50 or more to obtain a propylene resin film, the propylene resin having a weight average molecular weight of 250,000 to 500,000, a molecular weight distribution (weight average molecular weight / number average molecular weight) of 7.5 to 12.0, and a melting point of 160 to 170°C; an aging step of aging the propylene resin film for one minute or more at a temperature ranging from a temperature lower by 30°C than the melting point of the propylene resin to a temperature lower by 1°C than the melting point of the propylene resin; a stretching step of uniaxially stretching the aged propylene resin film; and an annealing step of annealing the stretched propylene resin film.

7. The method for producing a propylene resin microporous film according to claim 6, wherein the aged propylene resin film has an amount of heat of fusion of 110 mJ/mg or more determined by differential scanning calorimetry, and a birefringence of $1.4 \times 10^{-2}$ or larger.

8. The method for producing a propylene resin microporous film according to claim 6, wherein the aged propylene resin film has an elastic recovery rate at 100% elongation of 95% or more.

9. The method for producing a propylene resin microporous film according to claim 6, wherein: the propylene resin is melted and kneaded in the extruder in the extrusion step at a temperature ranging from a temperature higher by 20°C than the melting point of the propylene resin to a temperature higher by 100°C than the melting point of the propylene resin; the stretching step includes a first stretching step of stretching the propylene resin film with a surface temperature thereof of -20 to 100°C at a stretching ratio of 1.05 to 1.60, and a second stretching step of stretching the propylene resin film having been stretched in the first stretching step with the surface temperature being higher than that of the propylene resin film in the first stretching step and equal to or lower than a temperature lower by 10 to 100°C than the melting point of the propylene resin at a stretching ratio of 1.05 to 3; and the propylene resin film having been stretched in the second stretching step is annealed in the annealing step with the surface temperature ranging from a temperature higher than the surface temperature of the propylene resin film in the second stretching step to a temperature lower by 10°C than the melting point of the propylene resin.

**10.** The method for producing a propylene resin microporous film according to claim 6
, wherein, in the aging step, the propylene resin film obtained in the extrusion step is wound into a roll, and the propylene resin film wound in a roll is aged for one hour or more at a temperature ranging from a temperature lower by 30°C than the melting point of the propylene resin to a temperature lower by 1°C than the melting point of the propylene resin.

**Patentansprüche**

**1.** Mikroporiger Propylenharzfilm, welcher durch uniaxiales Dehnen eines Propylenharzfilmes gebildete Mikroporen und eine Luftdurchlässigkeit von 100 bis 400 s/100 mL sowie eine Flächenöffnungsrate von 30 bis 55% aufweist, wobei das Propylenharz eine Molekulargewichtsverteilung (Gewichtsmittel des Molekulargewichts / Zahlenmittel des Molekulargewichts) von 7.5 bis 12.0 aufweist, wobei das Propylenharz ein Gewichtsmittel des Molekulargewichts von 250000 bis 500000 und einen Schmelzpunkt von 160 bis 170°C aufweist, wobei der längste Durchmesser der Öffnungskanten der Mikroporen 1 $\mu$m oder weniger beträgt, und der durchschnittliche längere Durchmesser der Öffnungskanten 500 nm oder weniger beträgt, wobei die Porendichte 15 Poren/$\mu$m$^2$ oder mehr beträgt.

**2.** Mikroporiger Propylenharzfilm nach Anspruch 1, wobei der mikroporige Propylenharzfilm einen durch dynamische Differenzkalorimetrie gemessenen Betrag der Schmelzwärme von 110 mJ/mg oder mehr und eine Doppelbrechung von 1.4 x 10$^{-2}$ oder größer hat.

**3.** Mikroporiger Propylenharzfilm nach Anspruch 1, wobei der mikroporige Propylenharzfilm eine elastische Erholungsrate bei 100% Dehnung von 95% oder mehr hat.

**4.** Batterieseparator, umfassend den mikroporigen Propylenharzfilm nach Anspruch 1.

**5.** Batterie, in der der Batterieseparator nach Anspruch 4 eingebaut ist.

**6.** Verfahren zur Herstellung eines mikroporigen Propylenharzfilms, umfassend:

Eine Extrusionsstufe enthaltend das Zuführen eines Propylenharzes an einen Extruder und das Schmelzen sowie Kneten des Propylenharzes, und das Extrudieren des Propylenfilmharzes durch eine an einer Spitze des Extruders befestigten T-Düse mit einem Reckverhältnis von 50 oder mehr, um einen Propylenharzfilm zu erhalten, wobei das Propylenharz ein Gewichtsmittel des Molekulargewichts von 250,000 bis 500,000, eine Molekulargewichtsverteilung (Gewichtsmittel des Molekulargewichts / Zahlenmittel des Molekulargewichts) von 7.5 bis 12.0 und einen Schmelzpunkt von 160 bis 170°C aufweist; eine Alterungsstufe enthaltend das Altern des Propylenharzfilms für eine Minute oder länger bei einer Temperatur, die zwischen einer Temperatur, die um 30°C niedriger als die Schmelztemperatur des Propylenharzes ist, und einer Temperatur liegt, die um 1°C niedriger als die Schmelztemperatur des Propylenharzes ist; eine Dehnungsstufe enthaltend das uniaxiale Dehnen des gealterten Propylenharzfilms; und
eine Tempernstufe enthaltend das Tempern des gedehnten Propylenharzfilms.

**7.** Verfahren zur Herstellung eines mikroporigen Propylenharzfilms nach Anspruch 6, wobei der gealterte Propylenharzfilm einen durch dynamische Differenzkalorimetrie gemessenen Betrag der Schmelzwärme von 110 mJ/mg oder mehr und eine Doppelbrechung von 1.4 x 10$^{-2}$ oder größer hat.

**8.** Verfahren zur Herstellung eines mikroporigen Propylenharzfilms nach Anspruch 6, wobei der gealterte Propylenharzfilm eine elastische Erholungsrate bei 100% Dehnung von 95% oder mehr hat.

**9.** Verfahren zur Herstellung eines mikroporigen Propylenharzfilms nach Anspruch 6, wobei: Das Propylenharz wird in dem Extruder in der Extrusionsstufe bei einer Temperatur geschmolzen und geknetet, die zwischen einer Temperatur, die um 20°C höher als die Schmelztemperatur des Propylenharzes ist, und einer Temperatur liegt, die um 100°C höher als die Schmelztemperatur des Propylenharzes ist; die Dehnungsstufe umfasst eine erste Dehnungsstufe enthaltend das Dehnen des Propylenharzfilms mit einer Oberflächentemperatur desselben von -20 bis 100°C bei einem Streckungsverhältnis von 1.05 bis 1.60, und eine zweite Dehnungsstufe enthaltend das Dehnen des in der ersten Dehnungsstufe gedehnten Propylenharzfilms mit der Oberflächentemperatur, die höher als die des Propylenharzfilms in der ersten Dehnungsstufe und gleich oder niedriger als eine Temperatur ist, die um 10 bis 100°C niedriger als der Schmelzpunkt des Propylenharzes ist, bei einem Streckungsverhältnis von 1.05 bis 3; und der in der zweiten Dehnungsstufe gedehnte Propylenharzfilm wird in der Tempernstufe bei der Oberflächentemperatur getempert, die zwischen einer Temperatur, die höher als die Oberflächentemperatur des Propylenharzfilms in der zweiten Dehnungsstufe, und einer Temperatur liegt, die um 10°C niedriger als der Schmelzpunkt des Propylenharzes ist.

10. Verfahren zur Herstellung eines mikroporigen Propylenharzfilms nach Anspruch 6, wobei in der Alterungsstufe der Propylenharzfilm aus der Extrusionsstufe zu einer Rolle gewickelt wird, und der zu einer Rolle gewickelte Propylenharzfilm wird für eine Stunde oder länger bei einer Temperatur gealtert, die zwischen einer Temperatur, die um 30°C niedriger als der Schmelzpunkt des Propylenharzes ist, und einer Temperatur liegt, die um 1°C niedriger als der Schmelzpunkt des Propylenharzes ist.

**Revendications**

1. Un film microporeux de résine de propylène, ayant des micropores formés par étirage uniaxial d'un film de résine de propylène, et ayant une perméabilité à l'air de 100 à 400 s / 100 ml et un taux d'ouverture de surface de 30 à 55%, dans lequel la résine de propylène a une distribution de poids moléculaire (poids moléculaire moyen en poids / poids moléculaire moyen en nombre) de 7,5 à 12,0, dans lequel la résine de propylène a un poids moléculaire moyen en poids de 250 000 à 500 000 et un point de de fusion 160 à 170 °C, dans lequel le diamètre le plus long des bords d'ouverture des micropores est de 1 $\mu$m ou moins, et le plus grand diamètre moyen des bords d'ouverture est de 500 nm ou moins, dans lequel la densité des pores est 15 pores / $\mu$m$^2$ ou plus.

2. Le film microporeux de résine de propylène selon la revendication 1, dans lequel le film de résine de propylène a une quantité de chaleur de fusion de 110 mJ / mg ou plus déterminée par calorimétrie différentielle à balayage, et une biréfringence de 1,4 x 10$^{-2}$ ou plus.

3. Le film microporeux de résine de propylène selon la revendication 1, dans lequel le film de résine de propylène a un taux de récupération élastique à 100% d'allongement de 95% ou plus.

4. Un séparateur de batterie, comprenant le film microporeux de résine de propylène selon la revendication 1.

5. Une batterie dans laquelle le séparateur de batterie selon la revendication 4 est incorporé.

6. Procédé de fabrication d'un film microporeux de résine de propylène, comprenant:

une étape d'extrusion de fourniture d'une résine de propylène à une extrudeuse et faire fondre et malaxer la résine de propylène, et l'extrusion du film de résine de propylène à travers une filière en T fixée à une extrémité de l'extrudeuse avec un rapport d'étirage de 50 ou plus pour obtenir un film de résine de propylène, la résine de propylène ayant un poids moléculaire moyen en poids de 250 000 à 500 000, une distribution de poids moléculaire (poids moléculaire moyen en poids / poids moléculaire moyen en nombre) de 7,5 à 12,0, et un point de fusion de 160 à 170 °C; une étape de vieillissement du vieillissement du film de résine de propylène pendant une minute ou plus à une température allant d'une température inférieure de 30 °C au point de fusion de la résine de propylène à une température inférieure de 1 °C au point de fusion de la résine de propylène; une étape d'étirage consistant à étirer uniaxialement le film de résine de propylène vieilli; et une étape de recuit consistant à recuire le film de résine de propylène étiré.

7. Le procédé de production d'un film microporeux de résine de propylène selon la revendication 6, dans lequel le film de résine de propylène vieilli a une quantité de chaleur de fusion de 110 mJ / mg ou plus déterminée par calorimétrie différentielle à balayage, et une biréfringence de 1,4 x 10$^{-2}$ ou plus.

8. Le procédé de production d'un film microporeux de résine de propylène selon la revendication 6, dans lequel le film de résine de propylène vieilli a un taux de récupération élastique de 95% ou plus à 100% d'allongement.

9. Le procédé de fabrication d'un film microporeux de résine de propylène selon la revendication 6, dans lequel: la résine de propylène est fondue et malaxée dans l'extrudeuse dans l'étape d'extrusion à une température comprise entre une température supérieure de 20 °C au point de fusion de la résine de propylène à une température supérieure de 100 °C au point de fusion de la résine de propylène; l'étape d'étirage comprend une première étape d'étirage consistant à étirer le film de résine de propylène avec une température de surface de celle-ci comprise entre -20 et 100 °C à un rapport d'étirage de 1,05 à 1,60, et une seconde étape d'étirage consistant à étirer le film de résine de propylène ayant été étiré dans la première étape d'étirage avec la température de surface étant supérieure à celle du film de résine de propylène dans la première étape d'étirage et égale ou inférieure à une température inférieure de 10 à 100 °C au point de fusion de la résine de propylène à un rapport d'étirage de 1,05 à 3; et le film de résine de propylène ayant été étiré dans la seconde étape d'étirage est recuit dans l'étape de recuit avec la température de surface allant d'une température supérieure à la température de surface du film de résine de propylène dans la seconde étape d'étirage à une température inférieure de 10 °C au point de fusion de la résine de propylène.

10. Le procédé de production d'un film microporeux de résine de propylène selon la revendication 6, dans lequel, dans l'étape de vieillissement, le film de résine de propylène obtenu dans l'étape d'extrusion est enroulé en un rouleau, et le film de résine de propylène enroulé dans un rouleau est vieilli pendant une heure ou plus à une température allant d'une température inférieure de 30 °C au point de fusion de la résine de propylène à une température inférieure de 1 °C au point de fusion de la résine de propylène.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO63199742 A
- JP 2007273443 A
- JP SHO6052 A
- US 20060103055 A1